# EUROPEAN PATENT SPECIFICATION

(11) **EP 0 450 872 B1**
(45) Date of publication and mention of the grant of the patent: **23.11.1994**
(21) Application number: 91302767.8
(22) Date of filing: 28.03.1991
(51) Int. Cl.: B01J 8/06, B01J 8/04, C01B 3/38

(54) **Endothermic reaction apparatus**
Endothermischer Reaktionsapparat
Appareil à réaction endothermique

(30) Priority: 03.04.1990 US 504375
(43) Date of publication of application: 09.10.1991
(73) Proprietor: THE STANDARD OIL COMPANY, Cleveland, Ohio 44114-2375 (US)
(72) Inventor: Ruhl, Robert C., Cleveland Heights, Ohio 44106 (US)
(74) Representative: Scott, Susan Margaret

(56) References cited:
- GB-A- 1 039 756
- GB-A- 2 050 413
- US-A- 4 157 241

## Description

### BACKGROUND OF THE INVENTION

The present invention relates to apparatus used in conducting endothermic reactions, and particularly to furnaces for reforming light hydrocarbons, especially mixtures of steam and/or carbon dioxide and light hydrocarbons.

Hydrogen for use in ammonia synthesis, methanol synthesis or hydrocracking plants, is frequently produced in a process using the following endothermic reforming reaction: 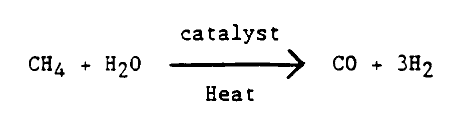
The hydrocarbon can be methane, which is shown in the above reaction, or other light hydrocarbons, or mixtures of these such as natural gas. The same reactions may also be employed where the desired product is CO or both CO and H₂. Another endothermic reaction is the conversion (pyrolysis) of ethane to ethylene which also produces the by-product hydrogen (H₂), and this reaction requires heat only, usually about 950°C and 3 atmospheres pressure, but needs no catalyst. The catalyst over which the methane reaction is carried out is, for example, nickel on an inert support, such as alumina, and is contained usually in vertical tubes which are supported in a furnace frequently called a "reforming furnace". Reforming furnaces are disclosed or schematically shown in the process flow diagrams of U.S. Patent Nos. 3,132,010; 3,264,066; and 3,382,044.

The tubes in the usual reforming furnaces extend vertically with reactants being fed by a manifold to one end of the set of tubes and product-rich gases being withdrawn from the other end of the tubes. Because the reforming reaction occurs at a high temperature and is endothermic, heat must be supplied to the tubes to heat the reactants. The reaction is carried out in the tubes at a high temperature of about 1500^{º}F and at a pressure of about 150 to 450 psig.

Various efforts have been made to improve the performance of the reforming furnace or to improve the structure of the furnace to facilitate the maintenance and operation of the furnace. For example, US Patent No. 4,161,510 to A J Edridge teaches the use of a ceramic paint coating on the exposed surface of the reforming tubes in which the reaction is conducted, the paint being reflective to reduce fissure creep of the tubes. US Patent No. 4,714,593 to A Naito et al teaches a reforming apparatus which uses a catalysed heat generating apparatus to achieve miniaturization of the furnace. US Patent No. 4,810, 472 to S P Andrews et al teaches a reforming apparatus which employs closed ended, double pass, externally heated, metal reformer tubes, also known as bayonet-tubes with controlled heat exchange between the product gas stream and the reactant stream across the wall of the tube.

Apparatus is also known which employs ceramic tubes for carrying out gas reactions in those ceramic tubes. For example, US Patent No. 2,987,382 to F Endter et al discloses such a ceramic tube furnace. Further, US Patent No. 2,018,619 to F Winkler et al teaches tubes made from material containing elementary silicon which may be embedded in other gas-tight tubes and which prevents carbon formation in carrying out pyrogenic conversion of hydrocarbons.

Known reforming furnaces are large and expensive, when measured as per unit of capacity, have tube lives shorter than would be desired, are prone to carbon deposition ("coking"), and must be frequently operated at temperatures below the ideally preferred values (for most efficient reactivity) due to the creep and corrosion behaviour of their reforming tubes.

GB-A-1039756 describes a steam reformer apparatus which has one or more tubular heating elements in the same vessel as the catalyst, each tubular element having an outer casing closed at the forward end and a flue outlet at the rear end, a tubular partition coaxial with the casing and a burner having a combustion chamber which converges towards an exit coaxial with the cylindrical casing for the discharge of hot product into the outer end of the partition tube which extends nearly from the exit to the closed forward end of the casing, but leaves a space beyond its end for the circulation of hot products. The air and fuel are premixed and ignited prior to entry into the reaction vessel.

US-A-4157241 describes a heating tube comprising a burner fed by premixed fuel and air, the tube generally having a ceramic wall.

### SUMMARY OF THE INVENTION

The present invention employs a ceramic or metal tube burner design which is enclosed by the reaction vessel in which the endothermic hydrocarbon reforming reaction takes place. This can be contrasted to with the usual prior art apparatus in which the reaction is done in the tube and the heat is supplied externally. The present design allows for a more compact apparatus which can employ a large number and high density of burner tubes and can operate at high temperatures and pressures to achieve high conversion of the hydrocarbon with high thermal efficiency of the process. Further, the materials of construction permit good operation with moderate steam-to-carbon ratios and minimal coking. The apparatus of the present invention allows for the use of relatively low-temperature seals.

The reaction apparatus of the present invention includes a reaction vessel for effecting an endothermic reaction, having an input for feeding the feed gas mixture into the reaction vessel, and a discharge for removing the product gas from said reaction vessel and at least one heat generating means for heating said reaction vessel and being enclosed by said reaction vessel. The reaction vessel may contain a catalyst bed at least partially filling the reaction vessel to facilitate the endothermic reaction to produce a product gas. The heat generating means comprises at least one ceramic or metal combustion tube concentrically surrounding a fuel feed tube which extends at least partially along the length and inside of the combustion tube. The heat generating means has inlets means for supplying fuel gas and air so the fuel gas and air will combust in said heat generating means and the heat which is generated will transfer from the heat generating means into the reaction vessel, and an exhaust outlet for removing the combustion exhaust gases from said heat generating means. Preferably, the feed gas mixture enters the reaction vessel at one end and the fuel gas and air enter the heat generating means at an opposite end from the feed end so that the flow of the reaction gases and the combustion gases are countercurrent.

It is an object of the present invention to provide an improved apparatus for conducting endothermic reactions, such as reforming light-hydrocarbons, and which will provide improved conversions, energy efficiency, and maintenance.

The present invention will become more apparent from the following description taken in conjunction with the accompanying drawings.

### BRIEF DESCRIPTION OF THE DRAWINGS

Figure 1 is a cross sectional representation of the reforming apparatus of the present invention.

Figure 2 is a cross sectional representation of the reforming apparatus of Figure 1 taken along lines 2.

Figure 3 is a cross sectional representation similar to Figure 2 but showing another embodiment of the present invention.

Figure 4 is a cross sectional representation, similar to Figure 1, of another embodiment of the invention which uses a perforated fuel feed tube.

Figure 5 is a cross sectional representation of yet another embodiment of the present invention, which uses a bayonet combustion tube.

Figure 6 is a block diagram of a methane reforming process which illustrates the present invention.

### DESCRIPTION OF THE PREFERRED EMBODIMENT

The present invention is described more specifically with reference to the following preferred embodiments.

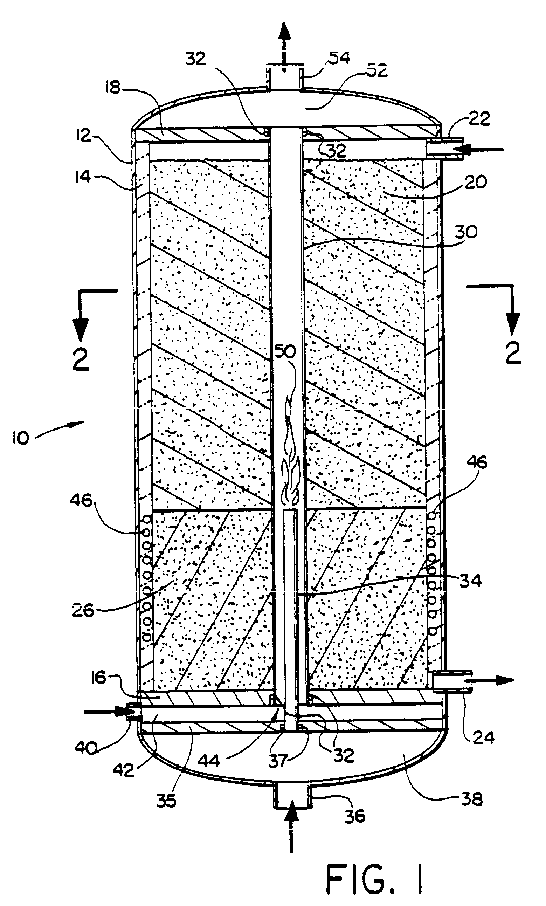

The reaction apparatus 10 is shown generally in Figure 1. Although it is oriented vertically, it should be appreciated that it could be operated horizontally, and so is not limited to a particular orientation. The apparatus comprises a steel shell 12 lined inside with a refractory insulation material 14 having a bottom plate 16 (which may also be referred to as a tube sheet) sealed, by gaskets and bolting or the like, to the steel shell, and a top plate 18 (or top tube sheet), which together define the reaction vessel. The bottom plate 16 supports a catalyst bed 20 through which passes one or more combustion tubes 30, which are made of a ceramic material and are sealed to bottom plate 16 and top plate 18. The shape of the reformer 10 is generally cylindrical and could be described as somewhat similar in construction to a shell and tube heat exchanger. The ceramic burner tubes are sealed to plates 16 and 18 by a hollow screw (not shown) threaded into the tube sheet at the end of the tube in combination with a steel pressure ring which expands a graphite seal, preferably a graphite foil spiral wrapped annular cylinder seal (such as Grafoil brand foil from Union Carbide). These seals 32 will hold the combustion tube in place, and contain the much higher shell side gas pressures, yet allow it to expand thermally and individually without significant gas flow leakage past the seals. Also, it may be desirable to apply an axial compressive force or preload to each tube, which will tend to neutralize or subtract from the axial tensile stresses produced by heat flows, by incorporating, e.g., in the tube seal assembly a stack of Belleville type springs (not shown) or the like. Alternatively, the seals could be held in place by a device which also provides the axial compressive force. A feature of the present design is that it allows for the use of lower temperature seals where the combustion tube or tubes are joined to the tube sheet.

Steel shell 12 has one or more feed inlets 22 for passing the feed gas mixture which is to be reformed into the reformer and down through the packed bed 20 to exit through one or more product outlet(s) 24. The feed gas mixture, for example, may be a mixture of natural gas and steam if the endothermic reaction is methane reforming reaction, although the mixture could be natural gas and water, which converts to steam in the reactor, or only natural gas, with the steam coming from water fed separately into the reactor. As can be appreciated, other combinations of feed mixtures can be introduced. As illustrated in Figure 1, the catalytic bed 20 which can be nickel on an alumina, inert support, or other appropriate catalyst, could include an inert section or zone 26, or the entire bed could consist of a single catalyst material or plural catalyst materials. In fact, the apparatus could be operated without a catalyst for some endothermic reactions.

Located concentrically inside combustion tube 30 is a fuel feed tube 34, which can be made from a metal alloy or a ceramic material. Fuel feed tube 34 is fixed to outer plate (or tube sheet) 35 by welding, using an o-ring or graphite foil seal 37. Fuel is fed from inlet 36 into fuel inlet manifold 38 to fuel feed tube 34. Air is fed via air inlet 40 to air inlet manifold 42 which is defined by outer plate 35 which is spaced apart from tube sheet 16 and which communicates with combustion tube 30 via annular inlet 44 so that air will flow in the annular space between the outer wall of fuel tube 34 and the inner wall of combustion tube 30. The combination of combustion tube 30 and fuel feed tube 34, constitute the heat generating means for the reactor.

The fuel gas is any clean fuel to which sufficient water vapor has been added (if necessary) to prevent coking prior to its combustion. If the fuel contains a high carbon level, it will require some preheating to maintain the necessary humidity level without condensation.

A resistance heating coil 46 is used inside the outer shell wall 12 of the reactor for cold starting the reactor. The resistance heater will preheat the adjacent zone to approximately 600°C (which will be more or less, depending upon the specific fuel being used), at which point auto-ignition of the fuel and air can occur. It may be necessary to flow air through until preheating is complete when the gas can be introduced to produce ignition in flame zone 50. The exhaust from combustion tube 30 is collected in exhaust manifold 52 and passes out exhaust outlet 54 which is in communication with manifold 52.

The ceramic combustion tube 30 is preferably made from sintered alumina and can be made by any of the various available processes for making and shaping dense (impervious) ceramic bodies. Also, there is no criticality in the use of alumina and other ceramic compositions can be used. For example, U.S. Patent No. 4,346,049 to J.A. Coppola et al. teaches a silicon carbide composition and process for producing sintered alpha silicon carbide ceramic bodies, the teachings of which are incorporated herein by reference, and such could be used to make the ceramic tube. Other ceramic compositions that could be employed include silicon nitride, aluminum nitride, sialon, or the like. The exact material preferred will depend upon the reactants and reaction products involved in the process, as well as temperature and pressure conditions.

The steel shell 12, bottom plate 16, top plate 18, manifolds 38 and 52, and outer plate 35 are preferably made of conventional pressure-vessel steel which is designed and rated for the reformer internal pressure of up 1200 psi or more and for temperatures of up to about 350°C. The refractory insulation 14 is preferably an erosion-resistant, low-conductivity type insulation such as an alumina composition with expansion joints used as required. The refractory should be rated for at least 1300°C continuous duty.

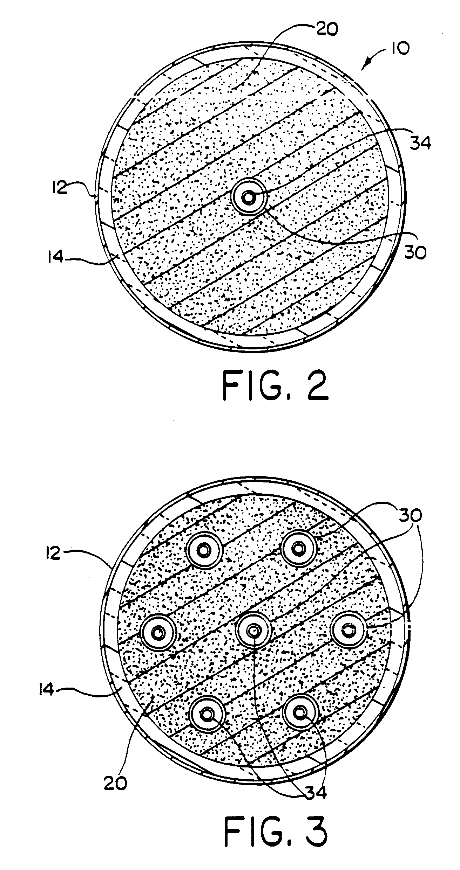

Figure 2 shows a cross section of reformer 10 along lines 2-2 in Figure 1. As can be seen fuel tube 34 is located concentrically within combustion tube 30 which in turn is surrounded by catalyst bed 20 inside insulated steel shell 12. The heat from combustion tube 30 will be transferred into catalyst bed 20 for effecting the endothermic reaction to reform the mixture of steam and light hydrocarbons. The use of external pressure surrounding the combustion tube 30 has the very significant advantage of placing the tube in a compressive stress state, where ceramics are much stronger than they are in tension.

As shown in Figure 3, the design could consist of more than one burner tube with Figure 3 illustrating seven burner tubes in an appropriate pattern. The invention is not limited to the use of one or seven, and is contemplated that as many as many thousands of combustion tubes could be incorporated in an appropriate size reformer apparatus. The use of small-diameter ceramic combustion tubes and graphite foil seals facilitates a denser packing of burner tubes than has been previously available in prior art apparatus.

The air supplied to inlet 40 could be supplied by a blower or a compressor depending upon the desired pressure drop, heat transfer requirements, and operation employed. A compressor will generate a higher inlet pressure than a blower, however, the cost of operating a blower would be less than operating a compressor. Also, it may be desirable to preheat the air fed to the heat generating means. Although no preheater is illustrated, such devices are known in the art and are commercially available. If desired, the exhaust flow could be expanded (with possibly some added heat) through a gas turbine to drive the air compressor.

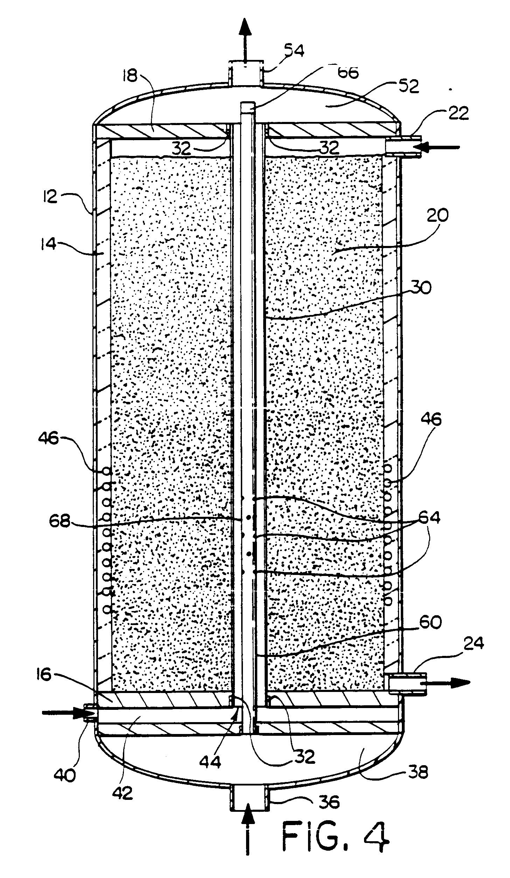

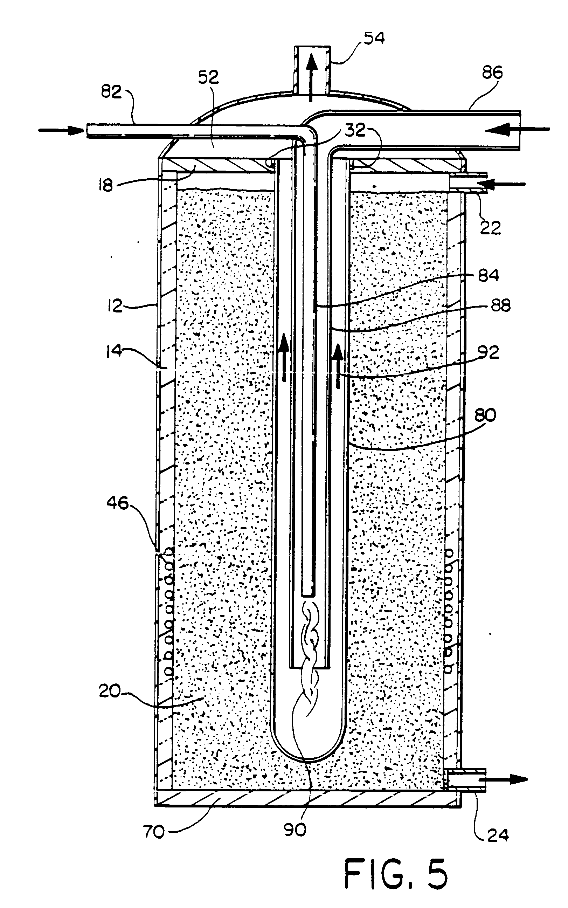

The apparatus shown in Figures 4 and 5 are basically similar to that shown in Figure 1 in that they include the shell 12, which contains a catalyst bed 20, and has feed inlet 22 and product outlet 24. The difference in these embodiments lies in the design of the heat generating means, although in each case, it is enclosed by the reaction vessel.

As shown in Figure 4, combustion tube 30 has a feed gas tube 60 which has perforations or holes 64 at spaced intervals along its length and has one end 66 plugged or otherwise closed. In this way, fuel fed via inlet 36 into manifold 38 will pass down tube 60 until it exits via the perforations 64. When the reactor is at its operating temperature, the fuel will mix with the air fed via inlet 40 to manifold 42 and into the burner zone 68 and auto-ignite to heat the reactor. Note that plug 66 need not resist very hot temperatures and thus could be made of graphite or heat resistant organic cement. Other methods for the staged introduction of the fuel could also be employed.

The design in Figure 5, differs in that the heat generating means is a bayonet type heat generating means. In this design, the tube sheet is replaced by an insulated vessel closure 70 and the combustion tube is a closed end tube 80 sealed to plate 18. The combustion tube is shown with a closed end but it could be a plugged design as shown in Figure 4. The fuel is fed via fuel inlet 82 to fuel feed tube 84, while air is fed via air inlet 86 to air feed tube 88. At operating temperature, the fuel will auto-ignite in flame zone 90 to produce the heat for conducting the endothermic reaction. The exhaust gases will pass up combustion tube 80, as shown by arrow 92 to manifold 52 where they exit the apparatus via exhaust line 54.

In general, for the apparatus of the present invention, the combustion tubes require a length to inside diameter ratio of typically 500 to 700 in order to achieve the required heat transfer per unit of flow volume for a natural gas plus steam reforming application. Even higher ratios are needed, if the reactor is to operate with low temperature differentials.

The preferred tube separation distance is quite small; for example 0.3 to 0.5 inches. It is limited by the required sizes of the seals and their associated threads and the need to have some small distance between these threads. Small distances lead to smaller vessel sizes and improved shell-side heat transfer.

The number of tubes in a single reactor could be as few as one to as many as 10,000 or more. Larger reactors will require thicker pressure-vessel walls, but will save on installation costs.

The preferred tube wall thickness will depend upon tube strength, corrosion rates, and diameter. The use of external pressure will permit the use of relatively thin walls, since ceramics are much stronger in tension than compression.

The preferred combustion tube inside diameter is usually equal to the tube separation distance (expressed as inside tube to inside tube surface). Thus, if the separation distance were 0.4 inches, the preferred tube ID would be 0.4 inches for a centerline spacing of 0.8 inches. An equilateral triangular tube arrangement is preferred for maximum packing density.

For example, one design could use 10,000 tubes, each 0.4 inch ID x 0.5 inch OD x 20 feet long on 0.8 inch triangular pitch. The bundle diameter would be about 7 feet and the total inside-surface area would be about 20,900 square feet.

The base-case embodiment employs a fuel and air stream entering the reactor at the same end where the process gas exits and flowing countercurrent to the process gas, with the exhaust leaving at the opposite end, where the process feed enters.

Another variation would arrange cocurrent flow of combustion gases and process gases. This scheme would require a hot seal on the exhaust end of the ceramic tubes. Such a seal might be made of fused glass or a ceramic cement, for example. The cold-end seal could be an O-ring or graphite foil type to allow tube thermal expansion.

Closed-end, triple-concentric combustion tubes might be used, with the combustion gas exiting at the same end of the reactor where the air and fuel enter. This is illustrated in Figure 5. The open ends of these concentric tubes might be at either the process feed or at the process exit end of the reactor.

The reforming catalyst and its ceramic support particles must be chosen according to a number of criteria. The catalyst must maintain sufficient activity over a long period of time at the high bed temperatures. It should be strong enough to support the bed weight above it. It should have a particle size which is small enough to properly fill the spaces between the tubes but large enough to minimize pressure drop through the bed to an acceptable value. It should not sinter-bond excessively to itself or to the tubes upon long exposures at the high temperatures. A suitable form of nickel on alumina is one possible candidate, but other catalysts are also reported to be suitable.

For hydrogen production, either a high-temperature shift catalyst and/or a low-temperature shift catalyst can optionally be placed within the reactor in the zone where the process gas is cooling and this will cause most of the CO to react with excess H₂O to form more H₂ with CO₂ as a byproduct (the so-called "water-gas shift" reaction).

If syngas is desired for ammonia synthesis, an appropriate (usually small) proportion of compressed air may be added to the natural gas and steam, such that the product syngas will contain the desired ratio of H₂ to N₂ (usually 3:1). This air addition will react in the catalyst bed during heatup, but will be low enough so as not to produce an excessive local temperature rise in the bed. The overall reaction will remain endothermic. This method for making ammonia syngas does not require the addition of any oxygen aside from the air itself, which is a desirable cost savings versus some competing processes which require the separation of oxygen from the air.

Cold reactor preheat could be achieved alternatively by other means than the electric resistance heater shown. For example, hot combustion gases could be introduced through supplementary nozzles in the reactor and circulated through the desired region.

The upper operating temperature of the graphite foil seals is limited by oxidation by the air present on one side. If a controlled very slow leakage of process gas is permitted to occur through the seal, this could sweep this air away from the seal material and permit the seals to exhibit long life at higher temperatures. Such an arrangement may be termed a purged seal condition.

Many different types of thermal insulation might be used inside the pressure vessel.

The maximum temperature of the combustion gases within the combustion tubes may be varied by adjusting the fuel composition and the fuel and air flow rates. Increasing the air flow rate progressively above the stoichiometric ratio will progressively lower the maximum local temperatures. Steam additions to the fuel can also reduce maximum temperatures.

The reactor maximum process temperature can vary widely, as required. However, if the auto ignition condition is to be maintained, reactors using maximum process temperatures below about 500°C (depending upon the choice of fuel) will normally require the selection of one of the closed-end combustion tube variants. In these cases, the maximum process temperature could be as low as perhaps 100°C.

The reactor (shell-side) fluid could be of many different types, including gases, boiling liquids, liquids, or slurries containing fine solids. Gas to liquid condensation might also desirably occur in the coolest zone of the reactor.

The combustion tubes might be made of various ceramics, depending upon the service conditions (temperature, corrosion, stresses, etc.). In addition to alumina, other possible materials for some applications would be carbide ceramics such as silicon carbide or other oxide ceramics such as mullite, stabilized zirconia, or the like. The use of external pressure will be a major advantage in controlling the combined stresses in the ceramic tubes to acceptable levels. Still other materials are also possible, such as metal tubes for lower-temperature applications.

If the fuel chosen is a mixture of a hydrocarbon (such as natural gas) plus steam, a reforming catalyst might also be positioned within the tube 34 to cause the fuel to partially reform during its heatup and hence to both absorb more heat from the process gas (improving cooling) and to simultaneously increase the heating value of the fuel gas (improving heating).

The following example is presented to illustrate the operation of an apparatus in accordance with the present invention and the advantages of very high temperature operation in producing syngas of superior composition. Modifications of the physical dimensions will alter the operating parameters and so adjustments may be necessary to achieve the same results.

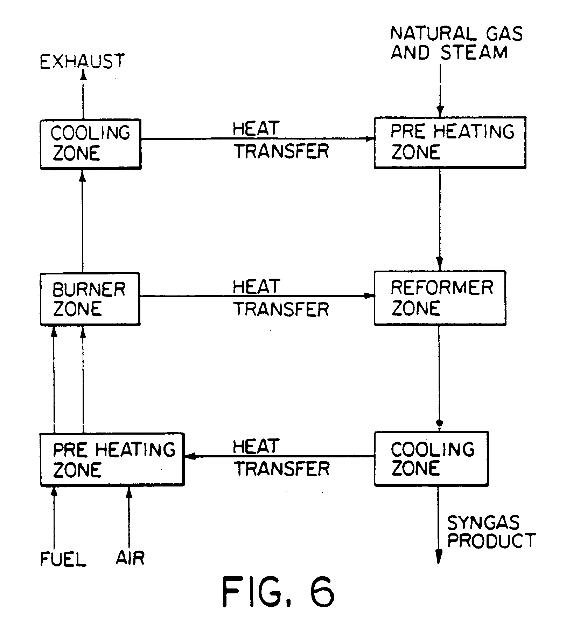

The flow diagram shown in Figure 6 is presented to help understand the example presented here and the various parameters involved in the process of the present invention.

### Example

A feed containing 2.5 volumes steam plus 1.0 volume natural gas (with an assumed composition of 90 volume percent CH₄, 7% C₂H₆, 2% N₂, and 1% CO₂) is passed through either a conventional reformer or this invention. The conventional reformer is similar to that described by Dwyer et al. (U.S. Patent No. 3,132,010) with a hot-zone reaction pressure of 155 psia, whereas the example of this invention uses 1070 psia for this pressure. The computed syngas compositions listed in Table 1 are based upon thermodynamic equilibrium compositions at the above pressures and at temperatures 20°C below the stated Table 1 peak temperatures. The compositions are tabulated after condensing water to 40°C.

**Table 1**

| Computed Syngas Compositions | | |
|---|---|---|
| | Conventional Radiant Reformer | This Invention |
| Reformer Peak Temperature (°C) | 850 | 1170 |
| Dried Syngas Pressure (psia) | 140 | 1140 |

| Dried Syngas Composition (mole %) | | |
|---|---|---|
| H₂ | 72.49 | 74.13 |
| CO | 15.97 | 20.56 |
| CO₂ | 6.83 | 3.77 |
| CH₄ | 3.60 | 0.96 |
| N₂ | 0.50 | 0.48 |
| H₂O | 0.61 | 0.10 |
| Volume Dried Syngas/Volume Nat. Gas | 3.98 | 4.15 |
| Percentage Methane Conversion | 84.1 | 95.6 |

Based upon data from Table 1, the advantages of the apparatus of the present invention are that the syngas pressure is much higher, thus eliminating or reducing the need for syngas compressors, the methane conversion percentage is much higher, the syngas CO/H₂ ratio is much higher, and the syngas CO/CO₂ ratio is much higher.

The new process may, if desired, be operated at still higher temperatures to obtain still higher methane conversions. CO/H₂ ratios, and CO/CO₂ ratios. It may also be operated at either higher or lower pressures and/or steam ratios. The ceramic tubes are less prone to coking than are metallic tubes under conditions of low steam ratios.

The new invention allows very high rates of heat transfer per unit of reactor vessel volume. For example, the average rate of heat exchange between the process gas and the air/fuel/exhaust flow was calculated to be some 7 MW/m³ for the reformer internal volume for a reformer design in accordance with the present invention and based upon the stated example, and this figure is more than a factor of ten above the corresponding value for a typical radiant reformer.

The invention has been described with respect to certain preferred embodiments. Various modifications and additions within the spirit of the invention will occur to or be made by those skilled in the art without departing from the concept of the invention. Therefore, the scope of the invention is to be determined by reference to the following claims.

## Claims

1. A reaction apparatus comprising:
a reaction vessel for effecting an endothermic reaction, and
at least one heat generating means for heating said reaction vessel, said heat generating means enclosed by said reaction vessel;
said reaction vessel having an input means for feeding a feed gas to be subjected to the endothermic reaction which results in a product gas being produced in said reaction vessel, and discharge means for removing product gas from said reaction vessel; and
said heat generating means comprising at least one ceramic or metal combustion tube concentrically surrounding a fuel feed tube which extends at least partially along the length of and inside said combustion tube, said heat generating means having means for supplying fuel to said fuel feed tube and air to said combustion tube, whereby said fuel will combust in said combustion tube and generate heat which is transferred into said reaction vessel by said combustion tube, and means for removing exhaust gases from said heat generating means, said apparatus is characterised by separate feeding of air and fuel through a preheating zone within said reaction vessel wherein heat is transferred to said air and fuel from at least one of said product gas and exhaust gases for preheating the air and fuel prior to combustion.

2. Apparatus according to claim 1 characterized in that the entry of fuel into the reaction vessel is at an opposite end thereof to the entry of feed gas into the vessel.

3. Apparatus according to claim 2 characterized in that the entry of said feed gas into said reaction vessel is at a first end thereof and that of said fuel into said heat generating means is at an opposite end from said first end whereby the flow of the reaction and the combustion are countercurrent.

4. Apparatus according to any one of the preceding claims characterized in that the entry of said air and fuel streams into the reaction vessel is at the same end where the product gas exits and said streams flow countercurrent to said product gas, with said exhaust gases leaving at the opposite end where the feed gas enters.

5. Apparatus according to any one of the preceding claims characterized by comprising multiple combustion tubes.

6. Apparatus according to any one of the preceding claims characterized by comprising at least one combustion tube mounted in contact with said reaction vessel by seals which allow said combustion tube to expand thermally.

7. Apparatus according to claim 6 characterized by comprising seals which are graphite seals.

8. Apparatus according to any one of claims 5-7 characterized by comprising multiple tubes, each of which is free to expand thermally, independently of each other.

9. Apparatus according to any one of the preceding claims characterized by comprising at least one combustion tube with a single wall between the endothermic reaction and the combustion.

10. Apparatus according to any one of the preceding claims characterized by comprising at least one inert zone in said reaction vessel.

11. Apparatus according to claim 10 characterized by an inert zone surrounding said preheating zone.

12. Apparatus according to any one of the preceding claims characterized in that said reaction vessel contains a catalyst bed at least partially filling said reaction vessel to facilitate the endothermic reaction.

13. Apparatus according to claim 10 characterized in that said catalyst bed comprises at least two catalyst zones.

14. Apparatus according to claim 13 characterized by comprising a catalyst bed with a first section with a first catalyst for a first reaction and a second section with a second catalyst for a second reaction.

15. Apparatus according to any one of the preceding claims characterized by comprising at least one ceramic combustion tube.

16. Apparatus according to claim 15 characterized in that said ceramic combustion tube is selected from the group consisting of alumina, silicon carbide, aluminium nitride, silicon nitride or sialon.

17. Apparatus according to claim 16 characterized by comprising an alumina combustion tube.

18. Apparatus according to any one of claims 1-14 characterized by comprising a metal combustion tube.

19. Apparatus according to any one of the preceding claims characterized in that said reaction vessel comprises a generally cylindrical shell surrounding said at least one combustion tube.

20. Apparatus according to claim 19 characterized in that said shell is metal.

21. Apparatus according to claim 19 or 20 characterized in that said shell further includes a layer of insulation on its inner surface.

22. Apparatus according to any one of the preceding claims characterized by comprising means for preheating the air.

23. Apparatus according to any one of the preceding claims characterized in that there is an annular space between said combustion tube and said fuel feed tube and said air enters into said combustion tube via said annulus.

24. Apparatus according to any one of the preceding claims characterized in that said fuel feed tube comprises a metal tube.

25. Apparatus according to any one of claims 1-23 characterized in that said fuel feed tube comprises a ceramic tube.

26. Apparatus according to any one of the preceding claims characterized in that the combustion tube is mounted by a means which applies an axial compressive force to the tube.

27. A process for effecting an endothermic reaction, characterized by comprising using a reaction apparatus according to any one of the preceding claims.

28. A process according to claim 27 characterized in that said air and fuel are separately heated in said preheating zone so as to auto-ignite when mixed together in said combustion tube.

## Patentansprüche

1. Reaktionsapparat, mit:
einem Reaktionsgefäß zum Bewirken einer endothermischen Reaktion, und
wenigstens einer Wärmeerzeugungseinrichtung zum Erwärmen des Reaktionsgefäßes, wobei die Wärmeerzeugungseinrichtung von dem Reaktionsgefäß umschlossen ist;
wobei das Reaktionsgefäß aufweist: eine Eingabeeinrichtung zum Zuführen eines Zufuhrgases, welches der endothermischen Reaktion zu unterziehen ist, was dazu führt, daß in dem Reaktionsgefäß ein Produktgas erzeugt wird, und eine Ausgabeeinrichtung zum Entfernen des Produktgases aus dem Reaktionsgefäß; und
wobei die Wärmeerzeugungseinrichtung wenigstens ein keramisches oder metallisches Verbrennungsrohr aufweist, das ein Brennstoffzufuhrrohr konzentrisch umgibt, welches sich wenigstens teilweise über die Länge und im Inneren des Verbrennungsrohres erstreckt, wobei die Wärmeerzeugungseinrichtung aufweist: eine Einrichtung zur Zufuhr von Brennstoff zu dem Brennstoffzufuhrrohr und von Luft zu dem Verbrennungsrohr, wodurch der Brennstoff in dem Verbrennungsrohr verbrennt und Wärme erzeugt, die von dem Verbrennungsrohr in das Reaktionsgefäß übertragen wird, und eine Einrichtung zum Entfernen von Abgasen aus der Wärmeerzeugungseinrichtung,
wobei der Apparat gekennzeichnet ist durch die separate Zufuhr von Luft und Brennstoff durch eine Vorwärmzone innerhalb des Reaktionsgefäßes, wobei von wenigstens einem von Produktgas und Abgasen Wärme auf die Luft und den Brennstoff übertragen wird, um die Luft und den Brennstoff vor der Verbrennung vorzuwärmen.

2. Apparat nach Anspruch 1, dadurch gekennzeichnet, daß der Einlaß des Brennstoffes in das Reaktionsgefäß sich an dem Ende befindet, das dem Einlaß des Zufuhrgases in das Gefäß gegenüberliegt.

3. Apparat nach Anspruch 2, dadurch gekennzeichnet, daß sich der Einlaß des Zufuhrgases in das Reaktionsgefäß an dessen erstem Ende befindet und der des Kraftstoffs in die Wärmeerzeugungseinrichtung am dem ersten Ende gegenüberliegenden Ende, wodurch die Ströme der Reaktion und der Verbrennung gegenläufig sind.

4. Apparat nach einem der vorhergehenden Ansprüche, dadurch gekennzeichnet, daß der Einlaß der Luft- und Brennstoffströme in das Reaktionsgefäß sich am selben Ende wie der Auslaß des Produktgases befindet und die Ströme gegenläufig zu dem Produktgas strömen, wobei die Abgase an dem Ende austreten, das dem Ende des Eintritts des Zufuhrgases gegenüberliegt.

5. Apparat nach einem der vorhergehenden Ansprüche, dadurch gekennzeichnet, daß er mehrere Verbrennungsrohre aufweist.

6. Apparat nach einem der vorhergehenden Ansprüche, dadurch gekennzeichnet, daß er wenigstens ein Verbrennungsrohr aufweist, welches durch Dichtungen, die eine Wärmeausdehnung des Verbrennungsrohres zulassen, in Kontakt mit dem Reaktionsgefäß befestigt ist.

7. Apparat nach Anspruch 6, dadurch gekennzeichnet, daß er Dichtungen aufweist, die Graphitdichtungen sind.

8. Apparat nach einem der Ansprüche 5-7, dadurch gekennzeichnet, daß er mehrere Rohre aufweist, die sich jeweils unabhängig voneinander thermisch ausdehnen können.

9. Apparat nach einem der vorhergehenden Ansprüche, dadurch gekennzeichnet, daß er wenigstens ein Verbrennungsrohr mit einer einzigen Wand zwischen der endothermischen Reaktion und der Verbrennung aufweist.

10. Apparat nach einem der vorhergehenden Ansprüche, dadurch gekennzeichnet, daß er wenigstens eine inerte Zone in dem Reaktionsgefäß aufweist.

11. Apparat nach Anspruch 10, gekennzeichnet durch eine die Vorwärmzone umgebende inerte Zone.

12. Apparat nach einem der vorhergehenden Ansprüche, dadurch gekennzeichnet, daß das Reaktionsgefäß ein Katalysatorbett aufweist, welches das Reaktionsgefäß wenigstens teilweise füllt, um die endothermische Reaktion zu erleichtern.

13. Apparat nach Anspruch 10, dadurch gekennzeichnet, daß das Katalysatorbett wenigstens zwei Katalysatorzonen aufweist.

14. Apparat nach Anspruch 13, dadurch gekennzeichnet, daß er ein Katalysatorbett mit einem ersten Abschnitt mit einem ersten Katalysator für eine erste Reaktion und einem zweiten Abschnitt mit einem zweiten Katalysator für eine zweite Reaktion aufweist.

15. Apparat nach einem der vorhergehenden Ansprüche, dadurch gekennzeichnet, daß er wenigstens ein keramisches Verbrennungsrohr aufweist.

16. Apparat nach Anspruch 15, dadurch gekennzeichnet, daß das keramische Verbrennungsrohr aus der Gruppe gewählt ist, die aus Aluminiumoxid, Siliziumkarbid, Aluminiumnitrid, Siliziumnitrid oder Sialon besteht.

17. Apparat nach Anspruch 16, dadurch gekennzeichnet, daß er ein Aluminiumoxidverbrennungsrohr aufweist.

18. Appparat nach einem der Ansprüche 1-14, dadurch gekennzeichnet, daß er ein Metallverbrennungsrohr aufweist.

19. Appparat nach einem der vorhergehenden Ansprüche, dadurch gekennzeichnet, daß das Reaktionsgefäß ein wenigstens ein Verbrennungsrohr umgebendes, im wesentlichen zylindrisches Gehäuse aufweist.

20. Apparat nach Anspruch 19, dadurch gekennzeichnet, daß das Gehäuse aus Metall besteht.

21. Apparat nach Anspruch 19 oder 20, dadurch gekennzeichnet, daß das Gehäuse ferner eine Isolierschicht auf seiner Innenfläche aufweist.

22. Apparat nach einem der vorhergehenden Ansprüche, dadurch gekennzeichnet, daß er eine Einrichtung zum Vorwärmen der Luft aufweist.

23. Apparat nach einem der vorhergehenden Ansprüche, dadurch gekennzeichnet, daß zwischen dem Verbrennungsrohr und dem Brennstoffzufuhrrohr ein Ringraum vorhanden ist und die Luft über den Ringraum in das Verbrennungsrohr eintritt.

24. Apparat nach einem der vorhergehenden Ansprüche, dadurch gekennzeichnet, daß das Brennstoffzufuhrrohr ein Metallrohr aufweist.

25. Apparat nach einem der Ansprüche 1-23, dadurch gekennzeichnet, daß das Brennstoffzufuhrrohr ein Keramikrohr aufweist.

26. Apparat nach einem der vorhergehenden Ansprüche, dadurch gekennzeichnet, daß das Verbrennungsrohr durch eine Einrichtung befestigt wird, die eine Axialdruckkraft auf das Rohr aufbringt.

27. Verfahren zum Bewirken einer endothermischen Reaktion, dadurch gekennzeichnet, daß es den Schritt der Verwendung eines Reaktionsapparates nach einem der vorhergehenden Ansprüche aufweist.

28. Verfahren nach Anspruch 27, dadurch gekennzeichnet, daß Luft und Brennstoff separat in der Vorwärmzone erwärmt werden, so daß sie bei Vermischung in dem Verbrennungsrohr selbstzünden.

## Revendications

1. Appareil réactionnel comprenant:
un récipient réactionnel pour effectuer une réaction endothermique, et
au moins un moyen générateur de chaleur pour chauffer ledit récipient réactionnel, ledit moyen générateur de chaleur étant enfermé dans ledit récipient réactionnel;
ledit récipient réactionnel ayant un moyen d'entrée pour introduire un gaz d'alimentation pour le soumettre à la réaction endothermique qui aboutit en une production d'un gaz produit dans ledit récipient réactionnel, et un moyen de décharge pour retirer le gaz produit dudit récipient réactionnel; et
ledit moyen de génération de chaleur comprenant au moins un tube de combustion en céramique ou métallique entourant concentriquement un tube d'alimentation d'un carburant qui s'étend au moins partiellement le long de la longueur de, et à l'intérieur dudit tube de combustion, ledit moyen de génération de chaleur ayant un moyen pour alimenter en carburant ledit tube d'alimentation en carburant et en air ledit tube de combustion, ce par quoi ledit carburant brûlera dans ledit tube de combustion et engendrera de la chaleur qui est transférée à l'intérieur dudit récipient réactionnel par ledit tube de combustion, et des moyens pour retirer les gaz d'échappement dudit moyen de génération de chaleur, ledit appareil est caractérisé par une alimentation séparée en air et en carburant à travers une zone de préchauffage à l'intérieur dudit récipient réactionnel dans lequel la chaleur est transférée auxdits air et carburant à partir d'au moins un desdits gaz produit et gaz d'échappement pour préchauffer l'air et le carburant avant la combustion.

2. Appareil selon la revendication 1, caractérisé en ce que l'entrée du carburant à l'intérieur du récipient réactionnel est à son extrémité opposée à l'entrée de l'alimentation en gaz à l'intérieur du récipient.

3. Appareil selon la revendication 2, caractérisé en ce que l'entrée dudit gaz d'alimentation à l'intérieur dudit récipient réactionnel est à une première extrémité de celui-ci et celle dudit carburant à l'intérieur dudit moyen de génération de chaleur est à une extrémité opposée à partir de ladite première extrémité, ce par quoi l'écoulement de la réaction et de la combustion sont à contre-courant.

4. Appareil selon l'une quelconque des revendications précédentes, caractérisé en ce que l'entrée desdits courants d'air et de carburant à l'intérieur du récipient réactionnel est à la même extrémité où le gaz produit sort et lesdits courants s'écoulent à contre-courant dudit gaz produit, lesdits gaz d'échappement quittant à l'extrémité opposée où le gaz d'alimentation entre.

5. Appareil selon l'une quelconque des revendications précédentes, caractérisé en ce qu'il comprend une multitude de tubes de combustion.

6. Appareil selon l'une quelconque des revendications précédentes, caractérisé en ce qu'il comprend au moins un tube de combustion monté en contact avec ledit récipient réactionnel à l'aide de joints qui permettent audit tube de combustion de se dilater thermiquement.

7. Appareil selon la revendication 6, caractérisé en ce qu'il comprend des joints qui sont des joints en graphite.

8. Appareil selon l'une quelconque des revendications 5 à 7, caractérisé en ce qu'il comprend une multitude de tubes, dont chacun est libre de se dilater thermiquement, indépendamment les uns des autres.

9. Appareil selon l'une quelconque des revendications précédentes, caractérisé en ce qu'il comprend au moins un tube de combustion avec une paroi unique entre la réaction endothermique et la combustion.

10. Appareil selon l'une quelconque des revendications précédentes, caractérisé en ce qu'il comprend au moins une zone inerte dans ledit récipient réactionnel.

11. Appareil selon la revendication 10, caractérisé par une zone inerte entourant ladite zone de préchauffage.

12. Appareil selon l'une quelconque des revendications précédentes, caractérisé en ce que ledit récipient réactionnel contient un lit de catalyseur remplissant au moins partiellement ledit récipient réactionnel pour faciliter la réaction endothermique.

13. Appareil selon la revendication 10, caractérisé en ce que ledit lit de catalyseur comprend au moins deux zones de catalyseur.

14. Appareil selon la revendication 13, caractérisé en ce qu'il comprend un lit de catalyseur avec une première section avec un premier catalyseur pour une première réaction et une seconde section avec un second catalyseur pour une seconde réaction.

15. Appareil selon l'une quelconque des revendications précédentes, caractérisé en ce qu'il comprend au moins un tube de combustion en céramique.

16. Appareil selon la revendication 15, caractérisé en ce que ledit tube de combustion en céramique est choisi dans le groupe constitué de l'alumine, du carbure de silicium, du nitrure d'aluminium, du nitrure de silicium, ou de sialon.

17. Appareil selon la revendication 16, caractérisé en ce qu'il comprend un tube de combustion en alumine.

18. Appareil selon l'une quelconque des revendications 1 à 14, caractérisé en ce qu'il comprend un tube de combustion métallique.

19. Appareil selon l'une quelconque des revendications précédentes, caractérisé en ce que ledit récipient réactionnel comprend une enveloppe généralement cylindrique entourant ledit au moins un tube de combustion.

20. Appareil selon la revendication 19, caractérisé en ce que ladite enveloppe est métallique.

21. Appareil selon la revendication 19 ou 20, caractérisé en ce que ladite enveloppe comprend de plus une couche d'isolant sur sa surface interne.

22. Appareil selon l'une quelconque des revendications précédentes, caractérisé en ce qu'il comprend un moyen pour préchauffer l'air.

23. Appareil selon l'une quelconque des revendications précédentes, caractérisé en ce qu'il existe un espace annulaire entre ledit tube de combustion et ledit tube d'alimentation en carburant et ledit air entre à l'intérieur dudit tube de combustion via ledit espace annulaire.

24. Appareil selon l'une quelconque des revendications précédentes, caractérisé en ce que ledit tube d'alimentation en carburant comprend un tube métallique.

25. Appareil selon l'une quelconque des revendications 1 à 23, caractérisé en ce que ledit tube d'alimentation en carburant comprend un tube en céramique.

26. Appareil selon l'une quelconque des revendications précédentes, caractérisé en ce que le tube de combustion est monté à l'aide d'un moyen qui applique une force compressive axiale au tube.

27. Procédé pour effectuer une réaction endothermique, caractérisé en ce qu'il comprend l'utilisation d'un appareil réactionnel selon l'une quelconque des revendications précédentes.

28. Procédé selon la revendication 27, caractérisé en ce que lesdits air et carburant sont chauffés séparément dans ladite zone de préchauffage de façon à s'auto-allumer quand ils sont mélangés ensemble dans ledit tube de combustion.
